# EUROPÄISCHE PATENTSCHRIFT

(11) **EP 2 083 189 B1**
(45) Veröffentlichungstag und Bekanntmachung des Hinweises auf die Patenterteilung: **03.08.2016**
(21) Anmeldenummer: 09000764.2
(22) Anmeldetag: 21.01.2009
(51) Int. Cl.: F16D 65/56

(54) **Scheibenbremse mit Sicherheitskupplung für die Nachstelleinrichtung**
Disc brake with safety clutch for readjustment device
Frein à disque doté d'un accouplement de sécurité pour le dispositif de réglage

(30) Priorität: 22.01.2008 DE 102008005455
(43) Veröffentlichungstag der Anmeldung: 29.07.2009
(73) Patentinhaber: KNORR-BREMSE Systeme für Nutzfahrzeuge GmbH, 80809 München (DE)
(72) Erfinder: Camilo-Martinez, José, 82008 Unterhaching (DE); Weggartner, Robert, 84367 Tann (DE); Kempinger, Georg, 81827 München (DE)
(74) Vertreter: Mattusch, Gundula

(56) Entgegenhaltungen:
- EP-A1- 0 566 008
- WO-A1-96/12114
- US-A- 5 681 135

## Beschreibung

Die Erfindung betrifft eine Scheibenbremse, die einen Bremssattel umfasst, in dem eine Bremsscheibe und zwei beidseitig der Bremsscheibe angeordnete Bremsbeläge montiert sind, und die zur Kompensierung des Verschleißes der Bremsbeläge mit einer Nachstellvorrichtung ausgestattet ist, die mindestens eine Nachstellspindel aufweist, der eine beim Überschreiten eines bestimmten Drehmomentes ansprechende Sicherheitskupplung zugeordnet ist.

Eine derartige Bremse ist aus der EP 0 566 008 A1 bekannt.

Die in Rede stehende Scheibenbremse ist besonders für Nutzfahrzeuge ausgelegt. Bei diesen Fahrzeugen werden die Bremsbeläge aufgrund der hohen abzubremsenden Massen stark belastet. Der Verschleiß der Bremsbeläge ist demzufolge entsprechend hoch. Die Nachstelleinrichtung ist so ausgelegt, dass entsprechend der Abnutzung der Bremsbeläge eine Nachstellung erfolgt. Beim Wechseln der Bremsbeläge kann es aufgrund der Auslegung der Nachstellvorrichtung zum Überschreiten eines zulässigen Drehmomentes der inneren Mechanik kommen. Dieses überhöhte Drehmoment wird praktisch ausschließlich beim Zurückdrehen über die manuelle Rückstelleinrichtung bzw. die Nachstellspindel eingeleitet. Wird dabei ein bestimmtes Drehmoment überschritten, spricht die Sicherheitskupplung an. Diese könnte auch als Überlastkupplung bezeichnet werden. Bei der in Rede stehenden Scheibenbremse hat sie die Aufgabe, die inneren Bauteile der Nachstelleinrichtung gegen eine Beschädigung oder gegen eine Zerstörung zu sichern.

Die Sicherheitskupplung ist bei vielen Ausführungsformen als Rutschkupplung ausgelegt. Von der Funktion her unterscheidet man Reibkupplungen mit einer konstanten Anpresskraft, die jedoch auch einstellbar sein kann. Gemäß einer anderen Bauform werden auch sogenannte Lamellenkupplungen verwendet. Die Lamellen bestehen entweder aus Stahl, wobei sie jedoch auch mit Reibbelägen versehen sein können. Die Anpresskraft wird durch geeignete Federn erzeugt.

Derartige Rutschkupplungen haben sich bei Scheibenbremsen bewährt. Nachteilig ist jedoch, dass die Anzahl der Bauteile relativ hoch ist.

Durch die relativ hohe Anzahl der Bauteile ist auch eine äußerst exakte Einstellung der Sicherheitskupplung nicht mehr gewährleistet.

Aus der WO 96/12114 A1 ist eine Befestigungsvorrichtung bekannt, die einen einstückigen Bolzen aufweist, der mit einem Flansch zum Ansetzen eines Werkzeuges versehen ist. Die beidseitig dieses Flansches liegenden Abschnitte sind mit gegenläufigen Außengewindegängen versehen. Auf einen dieser Gewindeabschnitt ist eine Mutter mit einer konischen Bohrung, die auch Gewindegänge aufweist, aufgesetzt. Zum Einschrauben dieses Bolzens in ein Werkstück wird auf den Flansch ein Werkzeug aufgesetzt und dieses Anzugsmoment kann durch Drehen der konischen Mutter verstärkt werden.

Aus der US 5 681 135 A ist ein ähnliches Befestigungselement zur Verwendung im orthopädischen Bereich bekannt. Das Befestigungselement enthält einen Bolzen mit zwei Gewindeabschnitten, deren Außengewindegänge gegenläufig sind. Auf einen Gewindeabschnitt ist eine Gewindemutter aufgesetzt, wobei auch dieser Gewindeabschnitt als Konus ausgebildet sein kann. Durch die Gegenläufigkeit der Außengewindegänge lässt sich das Anzugsmoment einstellen.

Der Erfindung liegt die Aufgabe zugrunde, eine Scheibenbremse der eingangs näher beschriebenen Art so zu gestalten, dass die Anzahl der Bauteile minimiert ist, und dass die Sicherheitskupplung kostengünstig herstellbar sowie äußerst exakt einstellbar ist.

Die gestellte Aufgabe wird dadurch gelöst, dass die Sicherheitskupplung aus einer Hülse und einem darin form- und/oder kraftschlüssig eingesetzten Bolzen besteht, dass der Bolzen mit einem dem zulässigen Drehmoment entsprechenden Drehmoment mit der Hülse verschraubt ist, dass beim Überschreiten des bestimmten Drehmomentes eine Relativbewegung zwischen der Hülse und dem Bolzen durchführbar ist, und dass die Hülse und der Bolzen zerstörungsfrei überlastbar sind.

Sofern es beim Wechsel der Bremsbeläge zu einer Überschreitung des zulässigen Drehmomentes kommt, wird durch die mögliche Relativbewegung zwischen der Hülse und dem Bolzen die Innenmechanik geschützt. Die Hülse und der Bolzen müssen aus einem Material bestehen, dessen Zugfestigkeit oder die Streckgrenze die zerstörungsfreie Überlastung der Verbindung der beiden Bauteile zulässt. Besonders vorteilhaft ist, dass die Sicherheitskupplung aus nur zwei Bauteilen ohne Verwendung von Federn besteht. Sofern die Verbindung zwischen den beiden Bauteilen form- und/oder kraftschlüssig ist, wird nicht nur eine ausschließlich auf Reibung basierende Einstellung vorgenommen. Das zur Verbindung notwendige Drehmoment bzw. die miteinander in Wirkverbindung stehenden Bauteile müssen jedoch eine zerstörungsfreie Überlastung ermöglichen. Deshalb ist das Drehmoment zumindest weitgehend unabhängig von Materialwerten.

Gemäß einer bevorzugten Ausführungsform ist vorgesehen, dass die Hülse mit einer Innengewindebohrung und der Bolzen mit einem Schaft mit einem Außengewinde versehen ist. Der Bolzen wird mit dem zulässigen Drehmoment angetrieben. Die Verbindung ist dann so ausgelegt, dass der Bolzen beim Überschreiten dieses zulässigen Drehmomentes beim Zurückdrehen des Nachstellers gegenüber der Hülse verdrehbar ist, so dass die Verbindung sich löst und keine Überlastung eintreten kann.

Für den unwahrscheinlichen Fall der Überlastung beim Vordrehens des Nachstellers wird die Verbindung noch fester, d.h. es findet ein gewisses Verdrehen der beiden Bauteile zu einander statt.

Damit auch dieser Fall erkennbar wird, ist vorgesehen, dass die Hülse und/oder der Bolzen, vorzugsweise jedoch die Hülse und der Bolzen jeweils eine Markierung aufweisen. Jede Markierung kann aus einem Steg geringer Höhe und Breite oder aus einer nutartigen Vertiefung derart bestehen, dass in der Normalbetriebsstellung die Markierungen fluchtend zueinander stehen, und dass nach dem Wechseln der Bremsbeläge eine Verdrehung des Bolzens gegenüber der Hülse erkennbar ist.

Bei der in Rede stehenden Scheibenbremse liegt die Hülse der Nachstellvorrichtung zugewandt, so dass der Bolzen der Nachstellvorrichtung abgewandt liegt.

Die Sicherheitskupplung ist so ausgelegt, dass die Einstellung auch von Personen durchgeführt werden kann, die nicht in einer Fachwerkstatt tätig sind.

Anhand der beiliegenden Zeichnungen wird die Erfindung noch näher erläutert.

Es zeigen:
- Figur 1: die Zuspanneinrichtung und die innerhalb des Bremssattels angeordnete Bremsscheibe mit den Bremsbelägen der erfindungsgemäßen Scheibenbremse im Schnitt
- Figur 2: die Sicherheitskupplung in einer sprengbildlichen Darstellung
- Figur 3: die Sicherheitskupplung in Schnittdarstellung
- Figur 4: die Sicherheitskupplung gemäß den Figuren 2 und 3 in einer Ansicht, jedoch gegenüber der Figur 3 in einer um 90° gedrehten Stellung und
- Figur 5: eine der Figur 4 entsprechende Draufsicht.

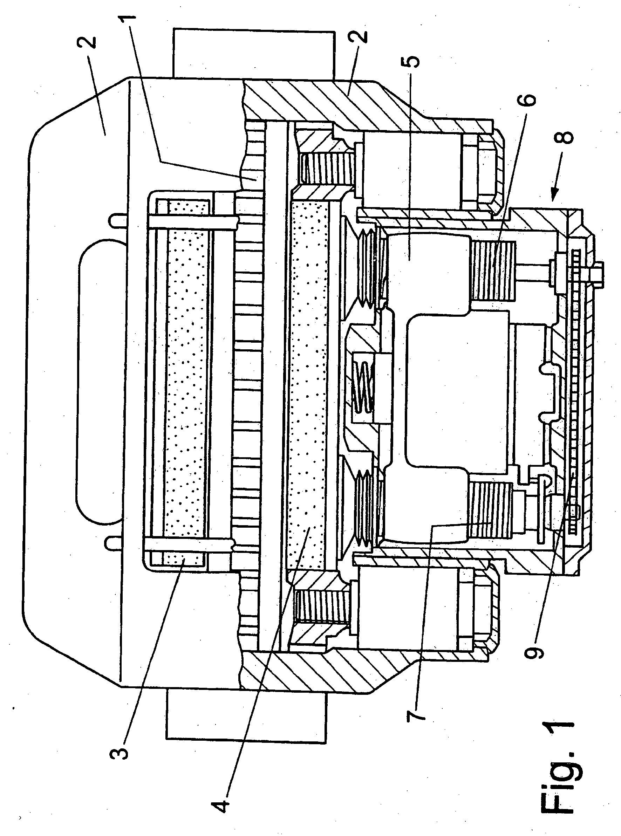

Die Figur 1 zeigt, dass eine auf einer nicht dargestellten Achse eines Nutzfahrzeuges aufgesetzte Bremsscheibe 1 in einem Bremssattel 2 angeordnet ist. Beidseitig der Bremsscheibe 1 sind die Bremsbeläge 3, 4 montiert. Die Scheibenbremse ist ferner vorzugsweise mit einer Traverse 5 ausgestattet, in der zwei parallel und im Abstand zueinander angeordnete Nachstellspindeln 6, 7 montiert sind. Durch das Bezugszeichen 8 ist die gesamte Zuspannvorrichtung bezeichnet. Die beiden Nachstellspindeln 6, 7 sind über eine Synchronisationseinrichtung, im dargestellten Ausführungsbeispiel durch einen Kettentrieb 9 synchron miteinander gekoppelt.

Eine komplette Scheibenbremse ist beispielsweise in der EP 0 566 008 A1 beschrieben.

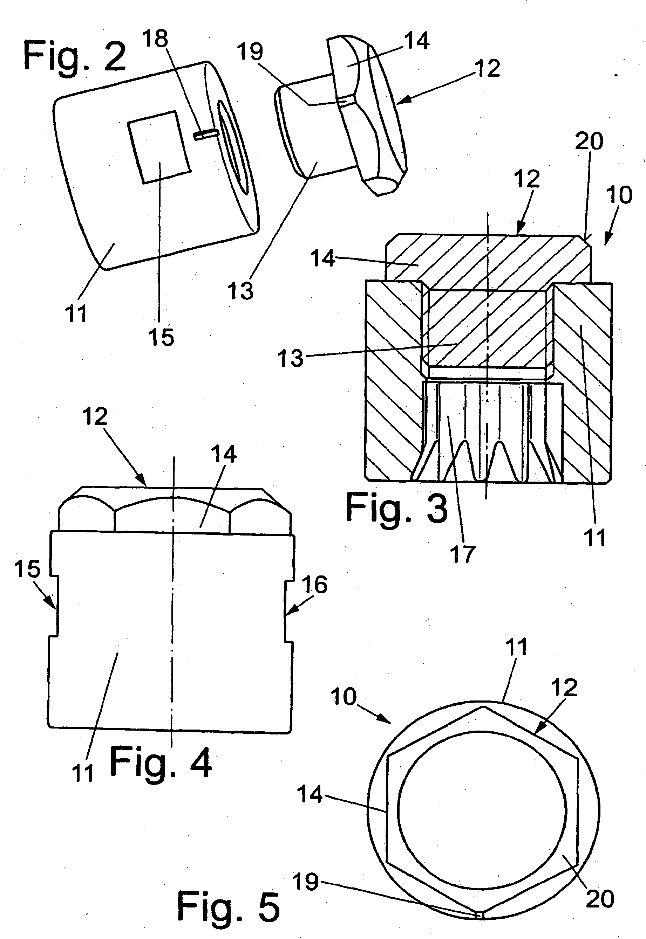

Wie die Figuren 2 bis 5 zeigen, besteht die Sicherheitskupplung 10 aus einer Hülse 11 mit einem Innengewinde und einem damit verschraubten Bolzen 12, der einen Gewindeschaft 13 aufweist. Der Bolzen 12 ist ferner noch mit einem außerhalb der Hülse 11 stehenden Sechskantkopf 14 versehen.

Der Bolzen 12 wird mit einem dem zulässigen Drehmoment entsprechenden Drehmoment mit der Hülse 11 verschraubt. Diese Verschraubung ist so ausgelegt, dass sich die Verbindung zwischen Bolzen 12 gegenüber Hülse 11 löst, wenn auf diesen Bolzen 12 ein gegenüber dem zulässigen Drehmoment größeres Drehmoment einwirkt. Zur formschlüssigen Verbindung ist die Hülse 11 an der dem Bolzen 12 abgewandten Seite mit einer inneren Verzahnung 17 in Form einer Sonderverzahnung versehen, wodurch die Sicherheit gegenüber einer Überlastung der Innenmechanik der Nachstellvorrichtung sichergestellt ist. Wie insbesondere die Figur 3 zeigt, erstreckt sich das Innengewinde der Hülse 11 und die Verzahnung 17 in etwa über die halbe Länge der Hülse 11.

Damit nach einem Wechsel der Bremsbeläge der Scheibenbremse erkennbar ist, ob sich der Bolzen 12 gegenüber der Hülse 11 verdreht hat oder nicht, was bei einer Überlastung beim Vordrehen des Nachstellers eintreten könnte, sind im dargestellten Ausführungsbeispiel die Hülse 11 und der Bolzen 12 mit Markierungen versehen, die im dargestellten Ausführungsbeispiel durch jeweils einen Steg 18 und 19 von geringer Breite und Höhe gebildet sind. Im Gegensatz zu der dargestellten Ausführung könnten diese Markierungen auch nutartig sein. Im Normalbetriebszustand stehen die Markierungen bzw. die Stege 18, 19 fluchtend zueinander. Zur Vermeidung scharfer Kanten ist der Sechskantkopf 14 des Bolzens 12 an seinem freien Endbereich noch mit einer umlaufenden Fase 20 versehen.

Die Erfindung ist nicht auf das dargestellte Ausführungsbeispiel beschränkt. Wesentlich ist, dass die Hülse und der Bolzen form- und/oder kraftschlüssig, durch Gewinde miteinander gekoppelt sind, und dass beim Überschreiten des zulässigen Drehmomentes die beiden Bauteile relativ zueinander verdrehbar sind, wobei der Bolzen gegenüber der Hülse verdrehbar ist.

## Patentansprüche

1. Scheibenbremse, die einen Bremssattel (2) umfasst, in dem eine Bremsscheibe (1) und zwei beidseitig der Bremsscheibe (1) angeordnete Bremsbeläge (3, 4) montiert sind, und die zur Kompensierung des Verschleißes der Bremsbeläge (3, 4) mit einer Nachstellvorrichtung ausgestattet ist, die mindestens eine Nachstellspindel (6, 7) aufweist, der eine beim Überschreiten eines bestimmten Drehmomentes ansprechende Sicherheitskupplung (10) zugeordnet ist, **dadurch gekennzeichnet, dass** die Sicherheitskupplung (10) aus einer Hülse (11) und einem darin form- und/oder kraftschlüssig eingesetzten Bolzen (12) besteht, dass der Bolzen (12) mit einem dem zulässigen Drehmoment entsprechenden Drehmoment mit der Hülse (11) verschraubt ist, dass beim Überschreiten des bestimmten Drehmomentes eine Relativbewegung zwischen der Hülse (11) und dem Bolzen (12) durchführbar ist, und die Hülse (11) und der Bolzen (12) zerstörungsfrei überlastbar sind.

2. Scheibenbremse nach Anspruch 1, **dadurch gekennzeichnet, dass** die Hülse (11) mit einer Innengewindebohrung und der Bolzen (12) mit einem Schaft (13) mit einem Außengewinde versehen ist.

3. Scheibenbremse nach Anspruch 1 oder 2, **dadurch gekennzeichnet, dass** die Hülse (11) und/oder der Bolzen (12) eine Markierung (18, 19) aufweisen.

4. Scheibenbremse nach Anspruch 3, **dadurch gekennzeichnet, dass** jede Markierung aus einem Steg (18, 19) geringer Höhe und Breite oder aus einer nutartigen Vertiefung gebildet ist, und dass in der Normalbetriebsstellung die Markierungen (18, 19) fluchtend zueinander stehen, und dass nach dem Wechsel der Bremsbeläge (3, 4) eine Verdrehung des Bolzens (12) gegenüber der Hülse (11) erkennbar ist.

5. Scheibenbremse nach einem oder mehreren der vorstehenden Ansprüche, **dadurch gekennzeichnet, dass** die Hülse (11) an der der Nachstellspindel (6, 7) zugewandten Seite mit einer Verzahnung versehen ist, und dass sich das Innengewinde und die Verzahnung (17) über die halbe Länge oder annähernd über die halbe Länge der Hülse (11) erstrecken.

6. Scheibenbremse nach einem oder mehreren der vorstehenden Ansprüche, **dadurch gekennzeichnet, dass** die Hülse (11) der Nachstellvorrichtung zugewandt und der Bolzen (12) der Nachstellvorrichtung abgewandt liegt.

## Claims

1. Disc brake comprising a brake calliper (2) in which a brake disc (1) and two brake linings (3, 4) arranged on both sides of said brake disc (1) are mounted, and which is equipped with an adjusting device for compensating the wear of said brake linings (3, 4), which includes at least one adjusting spindle (6, 7) which a safety clutch (10) is associated with, that responds when a defined torque is exceeded, **characterised in that** said safety clutch (10) consists of a sleeve (11) and a pin (12) inserted therein with form-locking and/or frictional connection, that said pin (12) is screwed to said sleeve (11) with a torque corresponding to the admissible torque, that, when said defined torque is exceeded, a relative movement can be realised between said sleeve (11) and said pin (12), and that said sleeve (11) and said pin (12) are adapted to be overloaded in a non-destructive manner.

2. Disc brake according to Claim 1, **characterised in that** said sleeve (11) is provided with an internally threaded hole and said pin (12) is provided with a shaft (13) and an external thread.

3. Disc brake according to Claim 1 or 2, **characterised in that** said sleeve (11) and/or said pin (12) are provided with a marker.

4. Disc brake according to Claim 3, **characterised in that** each marker is constituted by a web (18, 19) having a small height and width or by a groove-like recess, and that, in the normal operational position, said markers (18, 19) are aligned with each other, and that after a change of said brake linings (3, 4) a rotation of said pin (12) relative to said sleeve (11) is recognisable.

5. Disc brake according to one or several of the preceding Claims, **characterised in that** said sleeve (11) is provided with a toothing on the side facing said adjusting spindle (6, 7), and that said internal thread and said toothing (17) extend over half the length or approximately half the length of said sleeve (11)..

6. Disc brake according to one or several of the preceding Claims, **characterised in that** said sleeve (11) faces said adjusting means and said pin (12) is turned away from said adjusting means.

## Revendications

1. Frein à disque comprenant un étrier de frein (2), dans lequel un disque de frein (1) et deux garnitures de frein (3, 4) disposées des deux côtés dudit disque de frein (1) sont montés, et qui est muni d'un dispositif de rattrapage pour la compensation de l'usure desdites deux garnitures de frein (3, 4), qui contient au moins une broche de réglage (6, 7), à laquelle est affecté un accouplement de sécurité (10), qui répond quand un couple défini est dépassé, **caractérisé en ce que** ledit accouplement de sécurité (10) consiste en une douille (11) et un boulon (12) y inséré en complémentarité de forme et/ou de force, **en ce que** ledit boulon (12) est vissé à ladite douille (11) à un couple correspondant au couple admissible, **en ce que**, quand ledit couple défini est dépassé, un mouvement relatif est réalisable entre ladite douille (11) et ledit boulon (12), et **en ce que** ladite douille (11) et ledit boulon (12) sont aptes à être surchargé d'une manière non destructive.

2. Frein à disque selon la revendication 1, **caractérisé en ce que** ladite douille (11) est dotée d'un trou à taraudage et **en ce que** ledit boulon (12) est doté d'une tige (13) et d'un filetage extérieur.

3. Frein à disque selon la revendication 1 ou 2, **caractérisé en ce que** ladite douille (11) et/ou ledit boulon (12) sont muni d'un repère.

4. Frein à disque selon la revendication 3, **caractérisé en ce que** chaque repère est formé par une traverse (18, 19) à petite hauteur et largeur, ou par un cavité similaire à une rainure, et **en ce qu'**en position de service normale lesdits repères (18, 19) ont un alignement l'un à l'autre, et **en ce qu'**après un changement desdites garnitures de frein (3, 4), une rotation dudit boulon (12) relatif à ladite douille (11) est visible.

5. Frein à disque selon une quelconque ou plusieurs des revendications précédentes, **caractérisé en ce que** ladite douille (11) est dotée d'une denture du côté en face de ladite broche de réglage (6, 7), et **en ce que** ledit taraudage et ladite denture (17) s'étendent sur la moitié de longueur ou sur environ mi-longueur de ladite douille (11).

6. Frein à disque selon une quelconque ou plusieurs des revendications précédentes, **caractérisé en ce que** ladite douille (11) se trouve en face dudit moyen de rattrapage et **en ce que** ledit boulon (12) est opposé audit moyen de rattrapage.
